# EUROPEAN PATENT APPLICATION

(11) **EP 3 406 356 A1**
(43) Date of publication of application: **28.11.2018**
(21) Application number: 18174004.4
(22) Date of filing: 24.05.2018
(51) Int. Cl.: B07B 1/22, B02C 17/24

(54) **ROTATIONAL DRIVE ARRANGEMENT FOR ROTATING A VESSEL**

(30) Priority: 25.05.2017 US 201762511220 P
(71) Applicant: Vermeer Manufacturing Company, Pella, IA 50219-0200 (US)
(72) Inventor: Torberson, Nathan Lee, Freeman, SD South Dakota 57029 (US)
(74) Representative: Hoffmann Eitle

(57) **Abstract**

Rotary machine including a vessel (106) mounted to rotate about an axis of rotation (130) that extends through the vessel. The rotary machine also includes a sprocket (142) mounted circumferentially about an exterior of the vessel. The sprocket defines a sprocket pitch diameter (PDs) and a sprocket addendum diameter (ADs). The rotary machine also includes a drive wheel (144) that intermeshes with the sprocket for driving rotation of the vessel about the axis of rotation of the vessel. The drive wheel includes a plurality of rotatable rollers (146) that are received between the sprocket teeth (160) of the sprocket. The rollers each have a roller diameter and a roller axis. The drive wheel has a drive wheel pitch diameter (PDdw) defined by the roller axes. The sprocket addendum diameter is equal to the sprocket pitch diameter plus a distance equal to at least 1.0 times the roller diameter.

## Description

### Technical Field

The present disclosure relates generally to rotational drive systems. Particularly, the present disclosure relates to rotational drive structures for rotating vessels such as drums, tubs and the like.

### Background

Rotational drive systems have been developed for machines having relatively large rotatable vessels. A trommel screening machine is one type of machine that includes this type of rotational drive system. Trommel screening machines are used to process unconsolidated material (e.g., aggregate) that contains a variety of differently sized particulates into separate consolidated materials having different particle sizes or grades. A typical trommel screening machine includes a rotating trommel drum into which unconsolidated material is fed. The trommel drum is rotated about its longitudinal axis as the unconsolidated material is fed therein, and the unconsolidated material is separated into separate consolidated materials based on size by screens carried with the rotating trommel drum. Other examples of machines including relatively large rotating vessels include tub grinders and concrete mixers.

A number of rotational drives have been developed for rotating relatively large vessels. Typically, such rotational drives include mechanical structures for transferring torque such as sprockets, roller chains, gears, and the like. In one example prior art configuration, a sprocket is mounted about the circumference of a rotatable vessel and a drive chain is mounted around the exterior of the sprocket so as to intermesh with the sprocket. The chain also extends around and intermeshes with a drive sprocket driven by a drive mechanism such as a motor (e.g., a hydraulic motor). This type of system is effective for transferring torque, but can present difficulties for maintenance because the chain must be removed from the drum to work on the drive sprocket.

Another prior art rotational drive configuration for driving rotation of a vessel includes a chain mounted about the circumference of the vessel, and one or more drive sprockets that engage the chain at an outer circumference of the chain. Still another type of prior art rotational drive configuration includes a sprocket mounted about an outer circumference of a vessel, and a roller drive that engages the teeth of the sprocket to drive rotation of the vessel. In this type of example, the sprocket can be formed by a plurality of sprocket segments, and the roller drive can include a drive wheel including a roller chain arranged in an endless loop.

### Summary

Certain aspects of the present disclosure relate to rotational drive arrangements for use in driving the rotation of relatively large vessels such as trommel drums, grinder tubs, and/or concrete mixer drums. In certain examples, the rotational drive arrangements can be used for driving vessels having outer diameters of at least 3 feet, 4 feet, 5 feet, 6 feet, 7 feet, 8 feet, 9 feet, 10 feet, or greater. In certain examples, the rotational drive arrangements provide effective driving capabilities even for relatively large vessels that may be out-of-round. In certain examples, the vessels may be out-of-round by at least 1/16 of an inch, or at least 1/8 of an inch, or at least 1/6 of an inch, or at least 1/4 of an inch. In certain examples, an outer drive sprocket mounted on the vessel can be off-center with respect to a central axis of rotation of the vessel by a certain amount and the rotational drive arrangement can be configured to effectively drive rotation of the vessel despite the off-center state of the vessel. In certain examples, the offset distance of the vessel can be at least 1/16 of an inch, or at least 1/8 of an inch, or at least 1/6 of an inch, or at least 1/4 of an inch.

It has been determined that rotational drives for driving the rotation of relatively large vessels can be the source of significant amounts of noise. In certain examples, such noise can be generated by drive systems that do not maintain effective timing between a driving component and a driven component of the rotational drive arrangements. This can lead to rapid and repeating accelerations and decelerations of the vessel as the driving and driven components move in and out of engagement and in and out of timing resulting in vibration and noise. Aspects of the present disclosure relate to rotational drive arrangements having customized torque transfer interfaces designed to reduce play and mistiming that may occur between a drive element and a driven element. In certain examples, the drive component can include a roller drive and the driven component can include a sprocket mounted on a rotating vessel. In certain examples, the rotating vessel can be supported on a rotational support such as on a set of trunnions. In certain examples, the drive component and the driven component can have a relatively deep torque transferring engagement that assists in smoothly transferring torque while maintaining effective timing between the components. In certain examples, the sprocket can have customized sprocket teeth that are contoured to provide extended contact times between the sprocket teeth and the rollers of the roller drive. In certain examples, the roller drive can include a roller chain mounted in an endless loop on a rotational driver such as a drive wheel. In certain examples, the sprocket on the vessel has a sprocket addendum diameter that is equal to a pitch diameter of the sprocket plus a distance equal to at least 1.25 times the roller diameter of the rollers of the drive wheel. In certain examples, the rotational drive arrangement is configured such that the roller axes of at least two of the rollers of the drive wheel are within an addendum circle of the sprocket at all times as the drive wheel drives rotation of the vessel-mounted sprocket. In certain examples, the rotational drive arrangement is configured such that, at certain times, the roller axes of at least three of the rollers of the drive wheel are within an addendum circle of the vessel-mounted sprocket as the drive wheel drives rotation of the sprocket. In certain examples, the sprocket is formed by a plurality of separate sprocket segments that are mounted together about a circumference of the vessel.

Another aspect of the present disclosure relates to a rotary machine including a vessel defining an interior for receiving materials. The vessel is mounted to rotate about an axis of rotation that extends through the vessel. The rotary machine also includes a sprocket mounted circumferentially about an exterior of the vessel so as to encircle the axis of rotation of the vessel. The sprocket includes a plurality of sprocket teeth. The sprocket defines a sprocket pitch diameter and a sprocket addendum diameter. The rotary machine also includes a drive wheel that intermeshes with the sprocket for driving rotation of the vessel about the axis of rotation of the vessel. The drive wheel includes a plurality of rollers that are received between the sprocket teeth of the sprocket. The rollers each have a roller diameter and a roller axis. The rollers are rotatable about their respective roller axes. The drive wheel has a drive wheel pitch diameter defined by the roller axes. The sprocket addendum diameter is equal to the sprocket pitch diameter plus a distance equal to at least 1.0 times the roller diameter. In other examples, the sprocket addendum diameter is equal to the sprocket pitch diameter plus a distance equal to at least 1.1 times the roller diameter. In a most preferred example, the sprocket addendum diameter is equal to the sprocket pitch diameter plus a distance equal to at least 1.25 times the roller diameter.

Another aspect of the present disclosure relates to a rotary machine including a vessel defining an interior for receiving materials. The vessel is mounted to rotate about an axis of rotation that extends through the vessel. The rotary machine also includes a sprocket mounted circumferentially about an exterior of the vessel so as to encircle the axis of rotation of the vessel. The sprocket includes a plurality of sprocket teeth. The sprocket defines a sprocket pitch diameter and a sprocket addendum diameter. The rotary machine further includes a drive wheel that intermeshes with the sprocket for driving rotation of the vessel about the axis of rotation of the vessel. The drive wheel includes a plurality of rollers that are received between the sprocket teeth of the sprocket. The rollers each have a roller diameter and a roller axis. The rollers are rotatable about their respective roller axes. The drive wheel has a drive wheel pitch diameter defined by the roller axes. The drive wheel and the sprocket are configured such that the roller axes of at least two of the rollers are within an addendum circle of the sprocket at all times as the drive wheel drives rotation of the sprocket. In certain examples, the sprocket and the drive wheel are configured such that, at certain times, the roller axes of at least three of the rollers are within the addendum circle of the sprocket as the drive wheel drives rotation of the sprocket.

A variety of advantages of the disclosure will be set forth in part in the description that follows, and in part will be apparent from the description, or may be learned by practicing the various aspects of the present disclosure. It is to be understood that both the forgoing general description and the following detailed description are exemplary and explanatory only and are not restrictive of the broad inventive concepts upon which the examples are based.

### Brief Description of the Drawings

The following drawings are illustrative of particular embodiments of the present disclosure and therefore do not limit the scope of the present disclosure. The drawings are not to scale and are intended for use in conjunction with the explanations in the following detailed description. Embodiments of the present disclosure will hereinafter be described in conjunction with the appended drawings, wherein like numerals denote like elements.
FIGURE 1 is an example of a trommel screening machine having a trommel drum that can be rotated by a rotational drive arrangement in accordance with the principles of the present disclosure;
FIGURE 2 is a schematic, side view of the trommel screening machine of FIGURE 1;
FIGURE 3 is a perspective view of a trommel drum suitable for use with the trommel screening machine of FIGURE 1; a rotational drive arrangement in accordance with the principles of the present disclosure is also shown; the trommel drum is shown without trommel screens mounted thereto;
FIGURE 4 is an enlarged view of a portion of the rotational drive arrangement of FIGURE 3;
FIGURE 5 is an enlarged view showing a portion of a sprocket mounted on the trommel drum of FIGURE 3, the sprocket being part of the rotational drive arrangement;
FIGURE 6 is a schematic, not-to-scale view of a rotational drive arrangement in accordance with the principles of the present disclosure;
FIGURES 7a-7c show a sequence of steps for designing a sprocket tooth/ sprocket pocket profile in accordance with the principles of the present disclosure having a contoured shape adapted to maintain extended contact with a corresponding roller of a drive wheel when the roller is within the pocket;
FIGURE 8 shows an example pocket shape defined between two teeth with the pocket being shaped via the method of FIGURES 7a-7c;
FIGURE 9 shows the pocket shape of FIGURE 8 in relation to the pitch diameter and the addendum diameter of a vessel-mounted sprocket;
FIGURE 10 illustrates an alternative pocket shape having modified dedendum shape;
FIGUE 11 illustrates an example intermeshed state of a rotational drive arrangement in accordance with the principles of the present disclosure, the drive arrangement includes a vessel-mounted sprocket and a drive wheel including rollers that intermesh with the sprocket, the arrangement is shown in a state in which the roller axes of at least three of the rollers of the drive wheel are within the addendum circle of the sprocket as the drive wheel drives rotation of the sprocket;

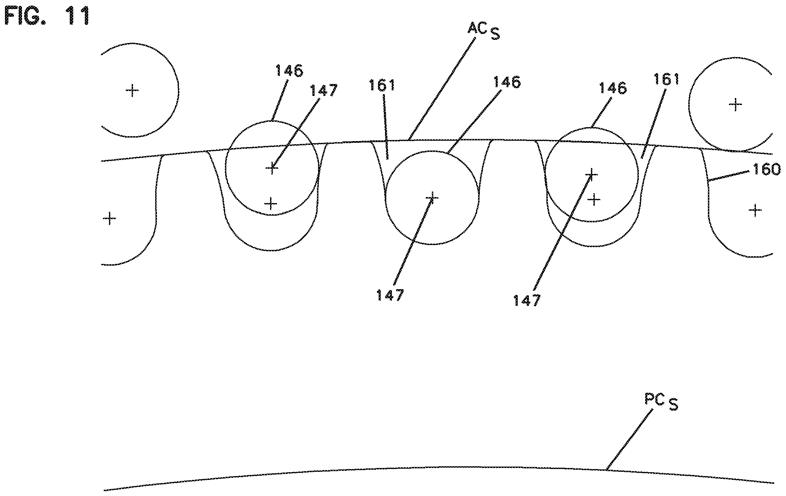

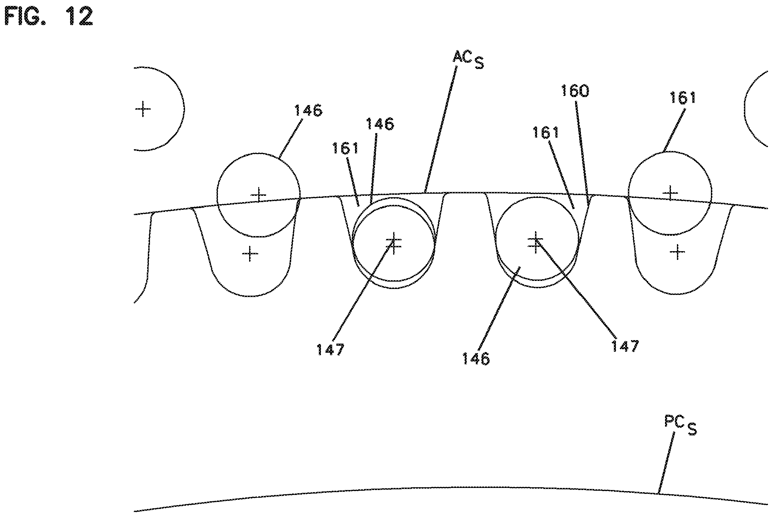

FIGURE 12 depicts another state of the drive arrangement of FIGURE 11 in which the roller axes of two of the rollers are within the addendum circuit of the sprocket as the drive wheel drives rotation of the sprocket;

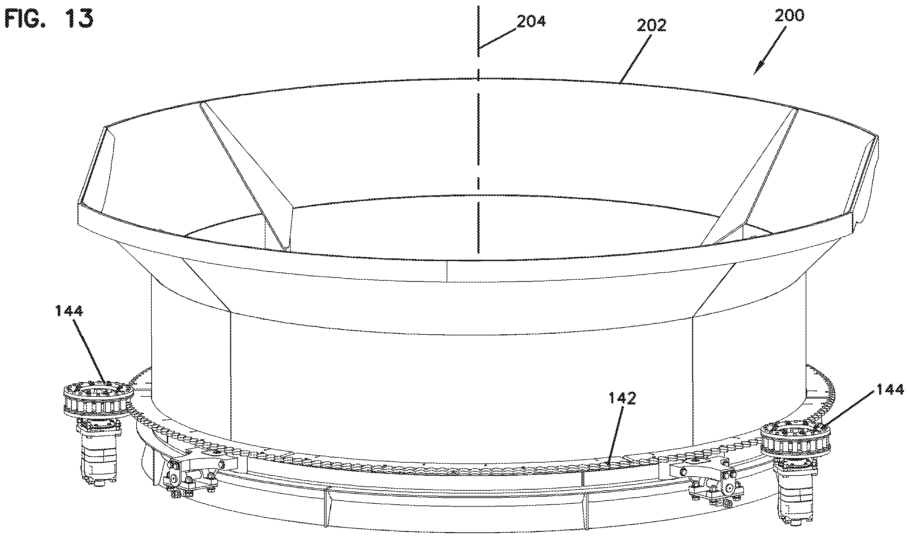

FIGURE 13 illustrates a tub grinder utilizing a drive arrangement in accordance with the principles of the present disclosure; and

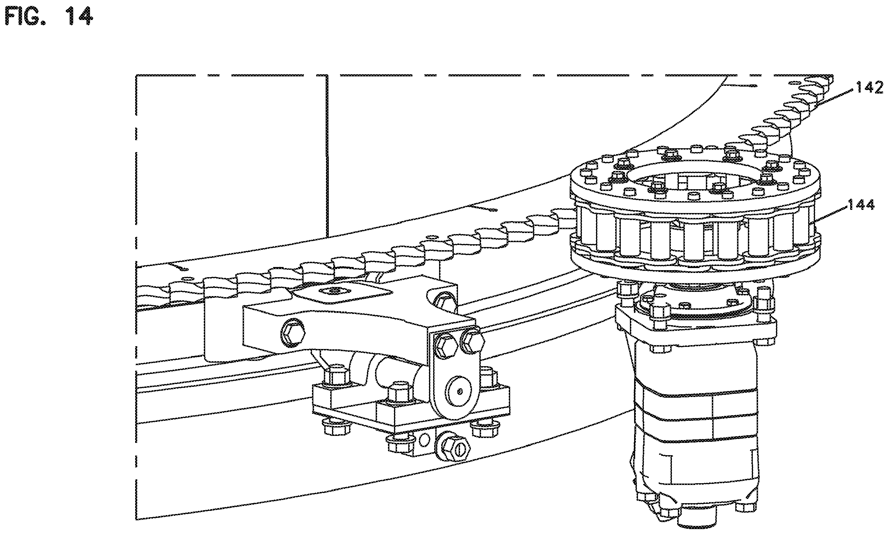

FIGURE 14 is an enlarged view of a portion of the drive arrangement of FIGURE 13.

### Detailed Description

Aspects of the present disclosure relate to rotational drive arrangements that can be readily used to drive relatively large vessels. Such arrangements can also be used to readily drive vessels that may be out-of-round or have outer circumferences which are off-center from their corresponding axes of rotation. Aspects of the present disclosure also relate to rotational drive arrangements designed to enhance timing between components of the drive arrangement and to increase contact times between the components during torque transfer. Certain aspects of the present disclosure also relate to arrangements configured to reduce vibrations, chattering, cyclical accelerations/decelerations and other interrelationships between components of the drive system that may lead to noise. Thus, aspects of the present disclosure can relate to rotational drives designed to reduce or minimize noise generation.

It will be appreciated that a preferred machine for incorporating drive arrangements in accordance with the principles of the present disclosure can include a trommel screening machine having a trommel drum that carries a trommel screen or screens. Thus, the majority of the detailed description provided herein is directed toward an example system incorporated into a trommel screening machine. However, it will be appreciated that rotational drive arrangements in accordance with the principles of the present disclosure can also be used to drive other types of rotating vessels such as tub grinder tubs, concrete mixer drums, and the like.

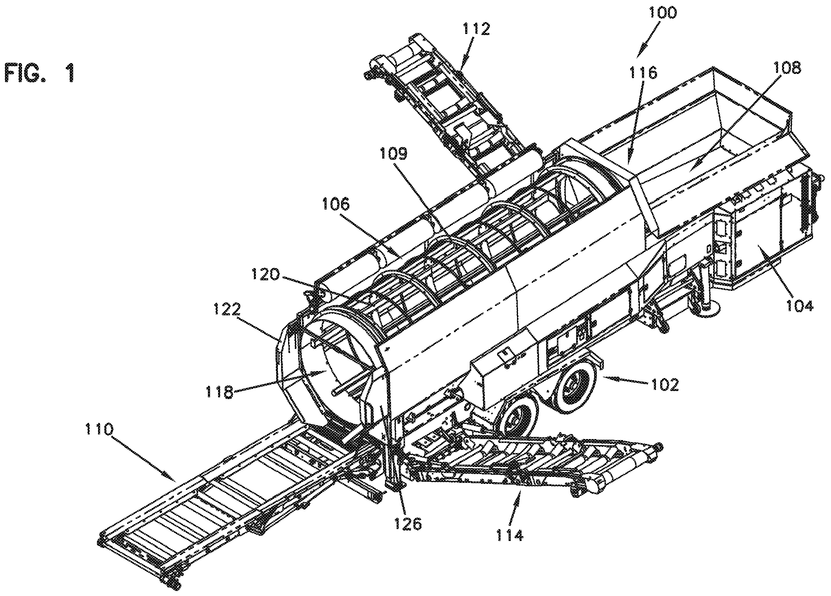

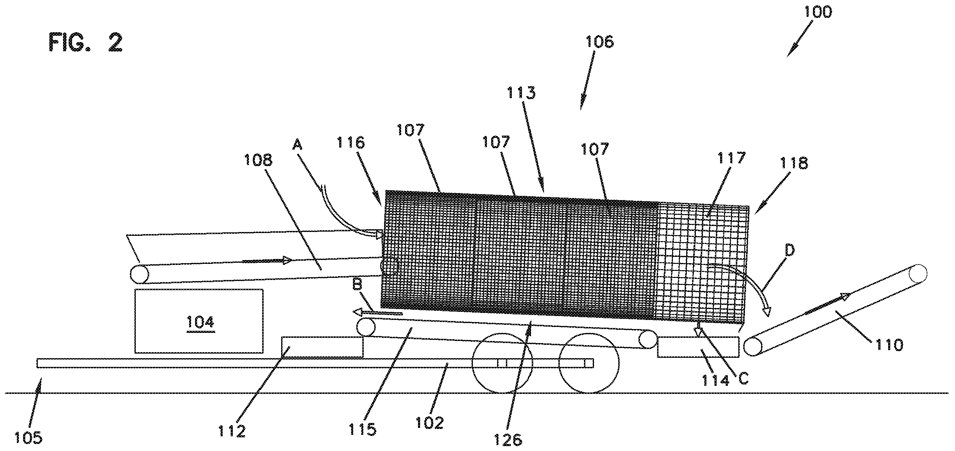

FIGS. 1 and 2 depict a trommel screening machine 100, according to one embodiment of the present disclosure. The trommel screening machine 100 includes a trailer support 102, a power system 104, a rotary trommel drum 106 carrying one or more trommel screens 107 (see FIG. 2), an inlet conveyor 108 (which may include a hopper), an outlet conveyor 110, a left side conveyor 112, and a right side conveyor 114. The conveyors preferably include conveyor belts (not shown at FIG. 1). The screening machine 100 is configured to separate/screen an unconsolidated material (e.g., raw aggregate) fed into the machine by the inlet conveyor 108 into separate consolidated products (e.g., rock/aggregate product that is separated based on particle sizing) delivered from the machine via the outlet conveyor 110, the left side conveyor 112, and the right side conveyor 114. The number of outlets can be varied. In FIG. 1, the trommel screens 107 are not shown on the trommel drum 106 so that a drum frame 109 is more clearly visible.

FIG. 2 shows an example configuration for the trommel screens. In certain examples, the screens can define axial sections having different opening sizes for allowing different sizes of particles to pass therethrough. In cases where screens having different sized openings are used, the screens are oriented with the screens having smaller sized openings positioned upstream from screens having larger sized openings. In other examples, the trommel screen may have openings of only one opening size. Screen selection is based on how many different consolidated products are desired.

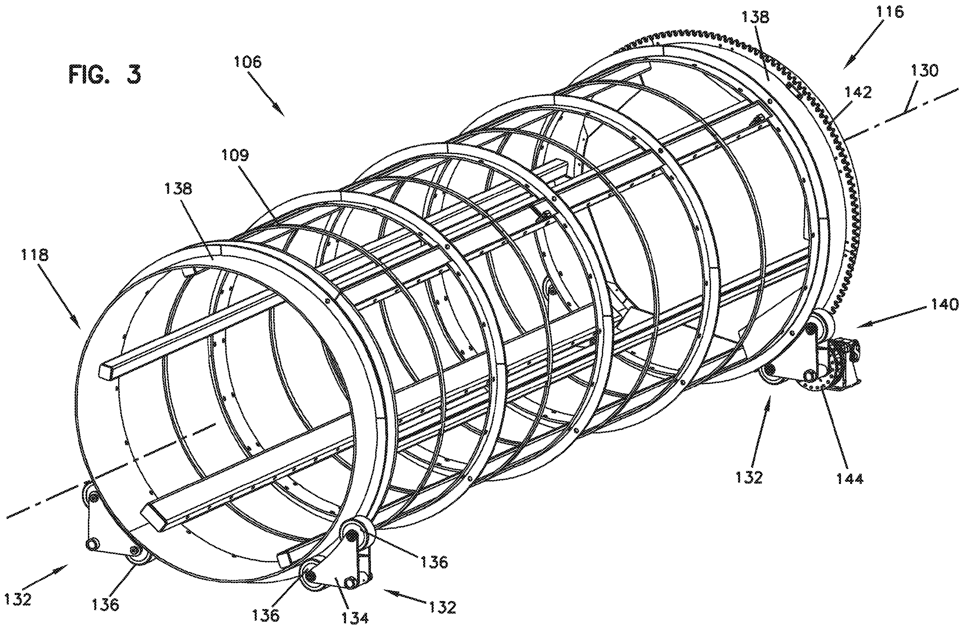

As shown at FIG. 3, unconsolidated material A is loaded into the rotary trommel drum 106 via the inlet conveyor 108. The material flows in an upstream-to-downstream direction within the drum 106 from an upstream, inlet end 116 to a downstream, outlet end 118 of the drum 106. A screen section 113 having first sized openings extends in a downstream direction from the upstream end 116. The screen section 113 allows a consolidated product B having a first particle size or smaller to fall therethrough. The consolidated product B falls onto a conveyor 115 which carries the material to the outlet conveyor 110. A screen section 117 having second sized openings larger than the openings of the screen section 113 extends in a downstream direction from the screen section 113 to the downstream end 118. The screen section 117 allows a consolidated product C having a second particle size or smaller to fall therethrough to the outlet conveyor 110. The material not screened at the screen sections 113, 117 is discharged from the downstream end 118 to the outlet conveyor 110 as consolidated product D.

The trailer support 102 of the trommel screening machine 100 is configured to support the trommel screening machine 100 during transport and operation. In some examples, the trailer support 102 includes a plurality of wheels and axles, the specific number thereof being dependent on the overall size and weight of the screening machine 100. In some examples, the trailer support 102 also includes a hitching end configured to be attached to a towing vehicle. In some embodiments, the trailer support 102 includes stabilizing elements (not shown) configured to stabilize the trommel screening machine 100 during stationary operation. Also, in some embodiments, the trailer support 102 is configured to be transported on public roadways by a towing vehicle.

The power system 104 provides power to the trommel screening machine 100 during operation. In some examples, the power system 104 includes an engine. In some examples, the power system 104 is an electric power system. In some examples, the power system includes a fuel cell such as a battery. In some embodiments, the engine is a diesel engine. In addition, the power system 104 includes a hydraulic system. In some embodiments, the power system 104 and the trommel screening machine 100, in their entirety, are operable remotely or by a control panel that is in communication with the power system 104. It is to be understood that the power system 104 could be carried on the trailer support 102 or could be in the form of the engine of the pulling vehicle (e.g., hydraulic connections to the engine of the pulling vehicle being able to provide the drive to power the trommel screening machine 100).

The rotary trommel drum 106, when fitted with screens, is configured to receive and filter unconsolidated material. The rotary trommel drum 106 includes the inlet 116, the outlet 118, and a plurality of screen sections 107. In some embodiments, the rotary trommel drum 106 is generally cylindrical in shape. The rotary trommel drum 106 has an overall length measured from the inlet 116 to the outlet 118. In general, the rotary trommel drum 106 is configured to separate smaller material, proximate to the inlet 116, from larger material, which is removed proximate to, or from, the outlet 118. During operation, the rotary trommel drum 106 rotates about a longitudinal axis, which causes material contained with the rotary trommel drum 106 to be stirred, mixed, and sifted. Additionally, in some embodiments, the rotary trommel drum 106 is mounted so that the rotary trommel drum 106 slopes downward from the inlet 116 to the outlet 118. Such a slope encourages material to travel from the inlet 116 to the outlet 118 during operation.

The inlet 116 of the rotary trommel drum 106 is configured to receive an unconsolidated material. In some embodiments, the unconsolidated material may be fed to the inlet 116 of the rotary trommel drum 106 by the inlet conveyor 108. In other embodiments, material may be fed to the inlet 116 by way of a material hopper. The outlet 118 of rotary trommel drum 106 is configured to provide an opening for material that is not removed from the rotary trommel drum 106 by way of passing through the screen sections 107.

The inlet conveyor 108 and outlet conveyor 110 are configured to introduce and remove material from the rotary trommel drum 106, respectively. The outlet conveyor 110 is configured to move material that falls from the outlet 118 of the rotary trommel drum 106 to a discharge location away from the screening machine. In the depicted embodiment, the outlet conveyor 110 is positioned longitudinally with respect to the rotary trommel drum 106. In some embodiments, the inlet and outlet conveyors 108, 110 are belt conveyors.

FIG. 3 shows the rotary trommel drum 106 in isolation from the remainder of the trommel screening machine 100. The rotary trommel drum 106 is shown with the screens removed. Thus, the drum frame 109 of the rotary trommel drum 106 is more clearly visible. In operation, the rotary trommel drum 106 is rotated about a central axis of rotation 130 that extends longitudinally through the length of the rotary trommel drum 106 from the upstream end 116 to the downstream end 118. A rotational support can be used to support the rotary trommel drum 106 relative to a main frame of the trommel screening machine 100 so that the rotary trommel drum 106 can be rotated about the central axis of rotation 130 relative to the main frame of the trommel screening machine 100. It will be appreciated that the rotation support can include bearings, cradles, and like structures. As depicted, rotational support for the rotary trommel drum 106 is provided by a trunnion arrangement including trunnions 132. The trunnions 132 can form a cradle for supporting the rotary trommel drum 106. The trunnions 132 can include pivotal members 134 supporting rollers 136. Two of the trunnions 132 each cooperate to define a section of the cradle that engages and rotationally supports the rotary trommel drum 106. The pivotal nature of the pivotal members 134 allow the trunnions 132 to self-center the rotary trommel drum 106. The rollers 136 engage and roll upon outer circumferential surfaces 138 of the rotary trommel drum 106.

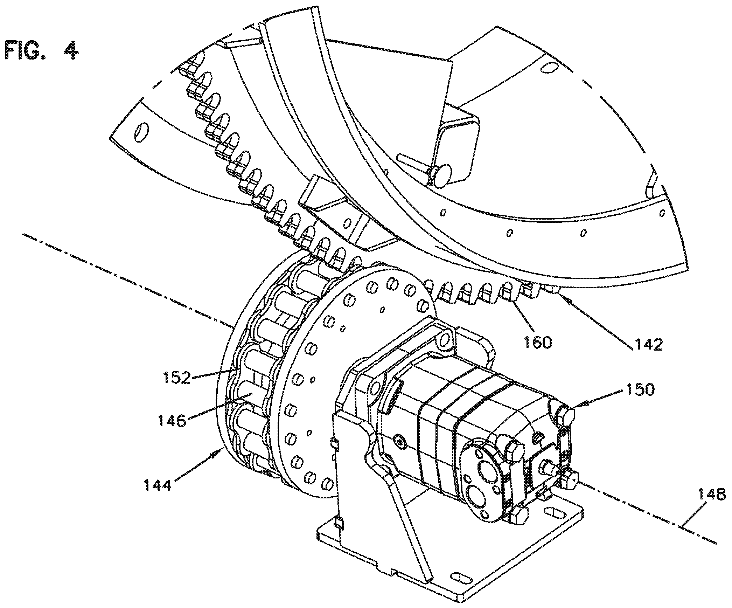

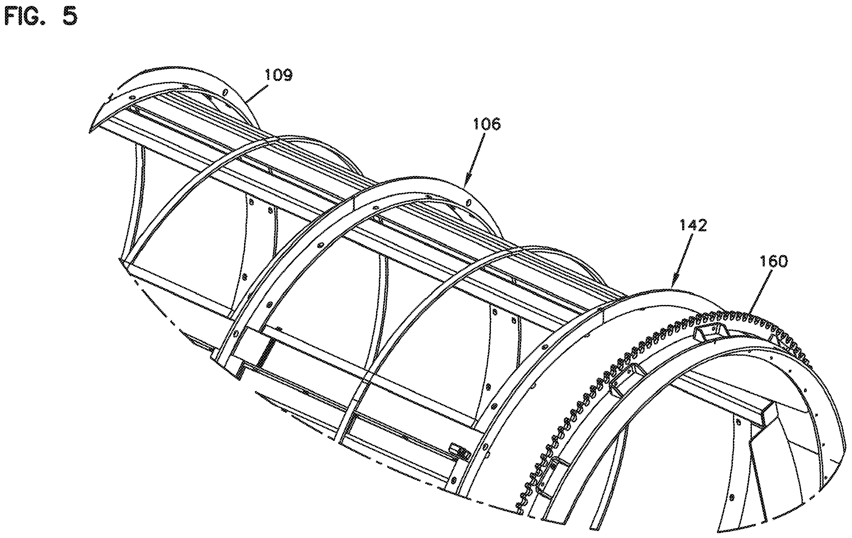

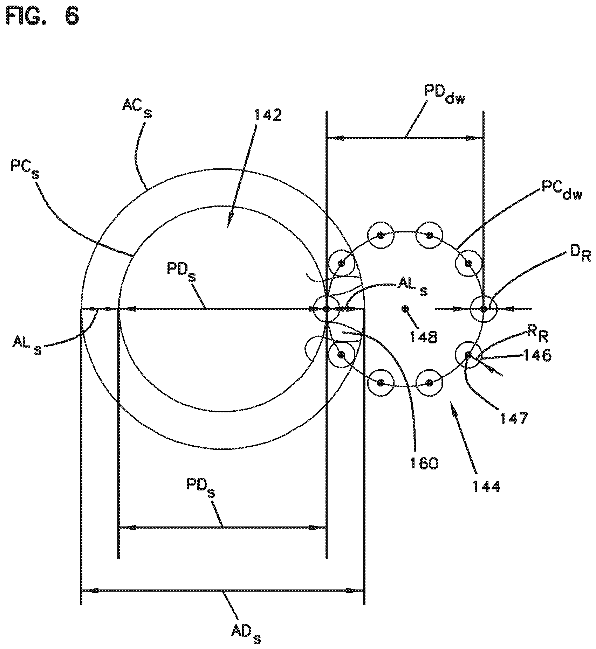

Referring still to FIG. 3, a rotational drive arrangement 140 is depicted. The rotational drive arrangement 140 is configured for driving rotation of the rotary trommel drum 106 about the central axis of rotation 130. The rotational drive arrangement 140 includes a sprocket 142 (see also FIG. 5) attached to the rotary trommel drum 106 which encircles the central axis of rotation 130. In one example, the sprocket 142 is attached to the rotary trommel drum 106 and extends around an outer circumference of the rotary trommel drum 106. The rotational drive arrangement 140 also includes a drive wheel 144 including rollers 146 (see FIG. 4). The rollers 146 fit within pockets between teeth of the sprocket 142 such that an intermeshing relationship is provided between the drive wheel 144 and the sprocket 142. The rollers 146 are each rotatable relative to the drive wheel 144 about roller axes 147 (see FIG. 6) that are parallel to a central axis of rotation 148 of the drive wheel 144. The drive wheel 144 is rotated about the axis 148 by a power driver 150. The power driver 150 can include a mechanism such as a hydraulic motor, a pneumatic motor, an electric motor, an internal combustion engine, and the like. In one example, the rollers 146 are part of a chain 152 that forms a continuous circle (e.g., an endless loop) about the axis 148 of the drive wheel 144.

In certain examples, the trunnions 132 or other type of rotational support for the rotary trommel drum 106 can be positioned offset in an axial direction from the rotational drive arrangement 140.

In certain examples, the sprocket 142 can be attached to an outer circumferential flange that is secured (e.g., welded) to an exterior of the rotary trommel drum 106. In certain examples, the sprocket 142 can be fastened to the flange by fasteners such as bolts. In certain examples, the sprocket 142 can be formed by a plurality of separate sprocket segments which are separate pieces that cooperate to define the full sprocket 142 when the segments are secured to the rotary trommel drum 106. In one example, the plurality of sprocket segments include six separate segments each defining a 60° segment of the sprocket 142 about the central axis of rotation 130. It will be appreciated that the sprocket 142 encircles the central axis of rotation 130. By "encircle", it is meant that the sprocket 142 extends around the central axis of rotation 130. The sprocket 142 may or may not be perfectly centered relative to the central axis of rotation 130. In certain examples, the sprocket 142 may be out-of-round or off-center from the central axis of rotation 130. In certain examples, the sprocket 142 may be off-center from the central axis of rotation 130 by at least 1/16 of an inch, or by at least 1/8 of an inch, or by at least 1/6 of an inch, or by at least 1/4 of an inch. It will be appreciated that the rotational drive arrangement 140 is configured to be able to accommodate the sprocket 142 being off-center or out-of-round due at least in part to the relatively deep intermeshing provided between the drive and driven components.

In certain examples, the sprocket 142 is relatively large in diameter. In one example, the sprocket 142 has an outer diameter of at least 3 feet, or at least 4 feet, or at least 5 feet, or at least 6 feet, or at least 7 feet, or at least 8 feet, or at least 9 feet, or at least 10 feet, or greater.

FIG. 6 is a schematic drawing that is not to scale. It is provided to assist in defining certain terminology with respect to different components of the rotational drive arrangement 140. As depicted, the drive wheel 144 includes a pitch circle PC_{dw} that extends through the roller axes 147 of the rollers 146 of the drive wheel 144. Thus, the roller axes 147 cooperate to define the pitch circle PC_{dw}. FIG. 6 also shows the roller axes 147 and the central axis 148 of the drive wheel 144. Additionally, FIG. 6 shows that each of the rollers 146 has a roller diameter Dᵣ and a roller radius Rᵣ. Further, the drive wheel 144 defines a pitch diameter PD_{dw} which is the diameter of the pitch circle PC_{dw}.

Referring still to FIG. 6, the sprocket 142 has a pitch diameter PDₛ which equals the drive wheel pitch diameter PD_{dw} multiplied by the number of sprocket teeth of the sprocket 142 divided by the number of rollers 146 of the drive wheel 144. In one non-limiting example, the drive wheel includes 20 rollers, the sprocket includes 120 teeth 160, the drive wheel has a pitch diameter of 11.2 inches and the sprocket has a pitch diameter of 67.1 inches. Ideally, when the drive wheel 144 and the sprocket 142 are inter-mated, the pitch circle PC_{dw} of the drive wheel 144 is tangent relative to a pitch circle PCₛ of the sprocket 142. However, in certain cases, to accommodate the sprocket 142 being off-center or out-of-round, it may be desirable for a gap to be provided between the pitch circles PCₛ and PC_{dw}. In certain examples, the gap can be from slightly above 0 to 0.25 of an inch. Other gaps may also be used. This assists in preventing the rollers from bottoming out in the sprocket pockets which may cause the trommel drum to lift from the trunnions. It will be appreciated that the pitch circle PCₛ of the sprocket 142 is the circle corresponding to the pitch diameter PDₛ.

Referring still to FIG. 6, sprocket 142 defines an addendum length ALₛ that extends from the pitch circle PCₛ to an addendum circle ACₛ of the sprocket 142. The addendum circle ACₛ is defined by the outer ends of the sprocket teeth 160 of the sprocket 142. The sprocket 142 also includes an addendum diameter ADₛ which equals the sprocket pitch diameter PDₛ plus two times the addendum length ALₛ of the sprocket 142. In certain examples, the addendum length ALₛ of the sprocket 142 is relatively long such that each pocket 161 defined between adjacent sprocket teeth 160 is relatively deep. In certain examples, the addendum length ALₛ is equal to at least one times the radius Rᵣ of each roller 146, or at least 1.1 times the radius Rᵣ of each roller 146, or preferably at least 1.25 times the radius Rᵣ of each roller 146.

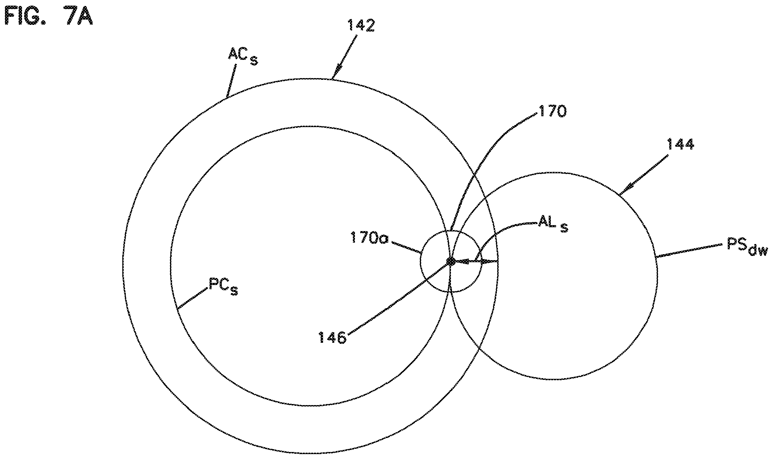

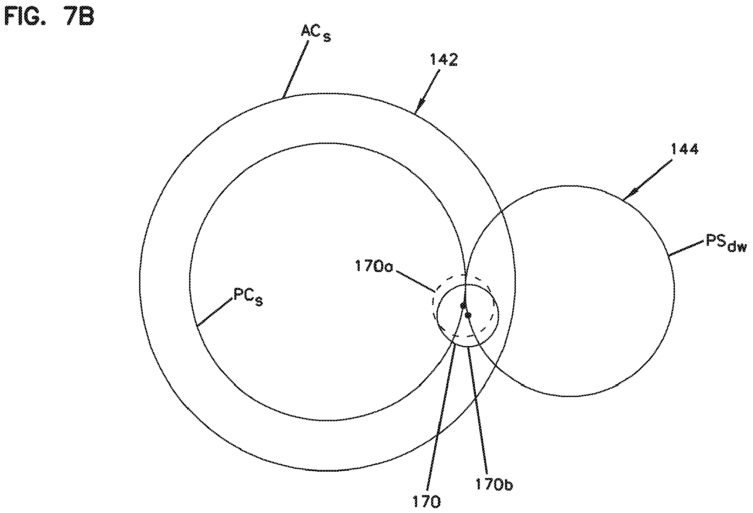

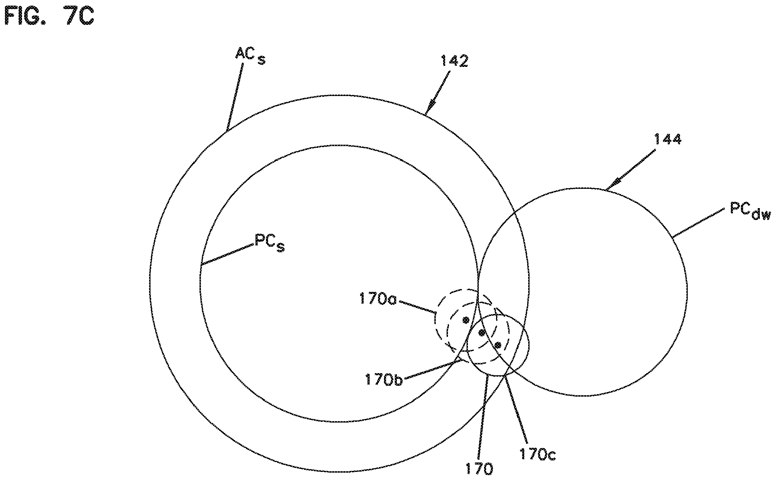

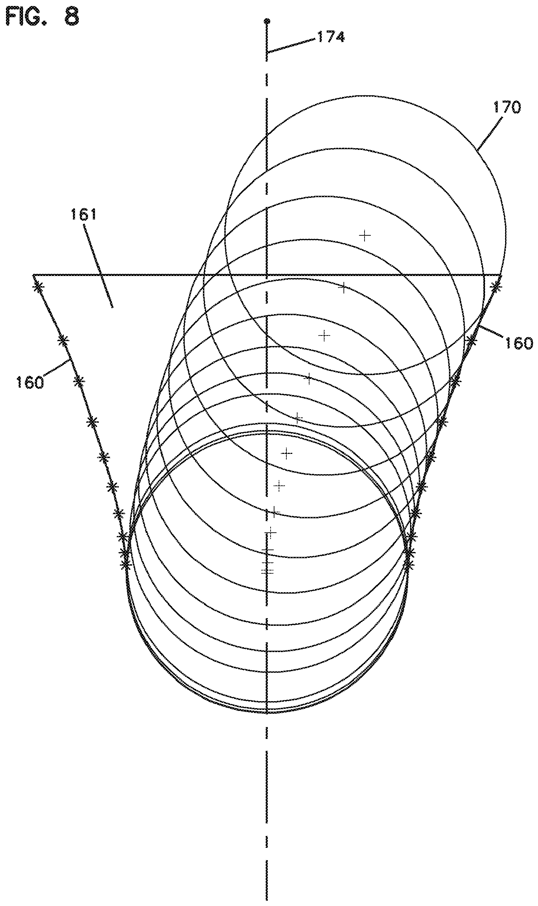

It is preferred for teeth 160 of the sprocket 142 to be contoured along the pocket regions to flow or conform to the path of travel of the rollers 146 to enhance or extend contact between the rollers 146 and the teeth 160 as the rollers 146 are within pockets 161 defined between the teeth 160. FIGS. 7a-7c show an example method for defining a contoured shape for the pockets 161 between the teeth 160. At FIG. 7a, a design roller shape 170 is fixed as image 170a on a representation of the sprocket 142, while the axes of rotation of the design roller 170 is positioned on the pitch circle PCₛ. In certain examples, design roller 170 has a roller diameter that is larger than the roller diameters of the actual rollers intended to be used with the designed sprocket. In certain examples, the diameter of the design roller can be .0025 to .0075 inches larger than the diameter of the actual rollers intended to be used with the sprocket having the designed pockets. In other examples, the diameter of the design roller 170 can be .004 to .006 inches larger than the diameter of the actual rollers intended to be used with the sprocket having the designed pockets. In still other examples, the diameter of the design roller 170 can be about .005 inches larger than the actual diameter of the actual rollers intended to be used with the sprocket having the designed pockets. Once the image 170a has been fixed relative to the image of the sprocket 142, the sprocket 142 and an image of the drive wheel 144 can be proportionally rotated (e.g., as would occur when the sprocket 142 and the drive wheel 144 are intermeshed and the drive wheel 144 drives rotation of the sprocket 142) an incremental amount as shown at FIG.7b. Once this incremental rotation has taken place, another image 170b the design roller 170 is fixed on the image of the sprocket 142. Thereafter, the sprocket 142 and the drive wheel 144 are again proportionally rotated another increment and then another image 170c of the design roller 170 is attached to the image of the sprocket 142. This process can be repeated many times over smaller increments to generate a precise contoured shape as shown at FIG. 8, where the contoured shape corresponds to blended tangent lines that extend between the fixed images The shape can be mirrored across a midline axis 174 to define the opposite side of the pocket.

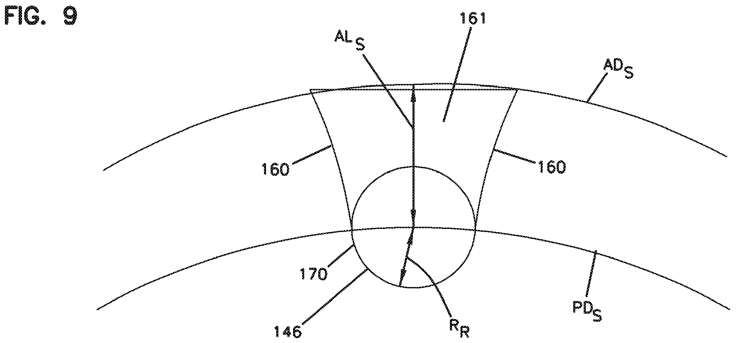

FIG. 9 shows an example contoured pocket shape where the addendum portions of the pocket 161 are shaped as described above so as to foster maintaining contact between the rollers 146 and the teeth 160 when the rollers are within the pockets 161. As shown at FIG. 9, the pocket is shown in relation to the pitch diameter PDₛ of the sprocket 142 and the addendum diameter ADₛ of the sprocket 142. It is noted that in addition to providing contouring of the pockets 161, the pockets 161 are also relatively deep to allow for the rollers 146 to spend additional time within the pockets 161 and to allow for the rotational drive arrangement 140 to be better able to accommodate variations such as out-of-roundness of the rotary trommel drum 106 or the rotary trommel drum 106 being off-center with respect to the central axis of rotation 130. In a preferred example, the addendum length ALₛ is greater than 1.25 times the roller radius Rᵣ, and the addendum diameter ADₛ is equal to or greater than the pitch diameter PDₛ plus 1.25 times the roller diameter Dᵣ.

It is desirable for the rotational drive arrangement 140 to be arranged and configured such that the rollers 146 of the drive wheel 144 remain effectively engaged with and intermeshed with the sprocket teeth 160 for as long as possible, and to maximize a number of rollers 146 that are in contact with the sprocket teeth 160 at any given time. In a preferred example, the sprocket 142 and the drive wheel 144 are configured such that, at certain times, the roller axes 147 of at least three of the rollers 146 are within the addendum circle ACₛ of the sprocket 142 so as to maximize contact between the drive wheel 144 and the sprocket 142 and to maintain timing between the drive wheel 144 and the sprocket 142. FIG. 11 shows the certain time in which the roller axes 147 of at least three of the rollers 146 are within the addendum circle ACₛ of the sprocket 142 as the drive wheel 144 drives rotation of the sprocket 142. In certain examples, the sprocket 142 and the drive wheel 144 are configured such that the roller axes 147 of at least two of the rollers 146 are within the addendum circle ACₛ of the sprocket 142 at all times as the drive wheel 144 drives rotation of the sprocket 142. FIG. 12 shows the rotational drive arrangement 140 configured with the roller axes 147 of two of the rollers 146 positioned inside the addendum circle ACₛ of the sprocket 142. In certain examples, the rotational drive arrangement 140 is configured such that the sprocket 142 and the drive wheel 144 cycle between a condition in which the roller axes 147 of two of the rollers 146 are positioned inside the addendum circle ACₛ as shown in FIG. 12, and a condition in which the roller axes 147 of three of the rollers 146 are positioned inside the addendum circle ACₛ of the sprocket 142.

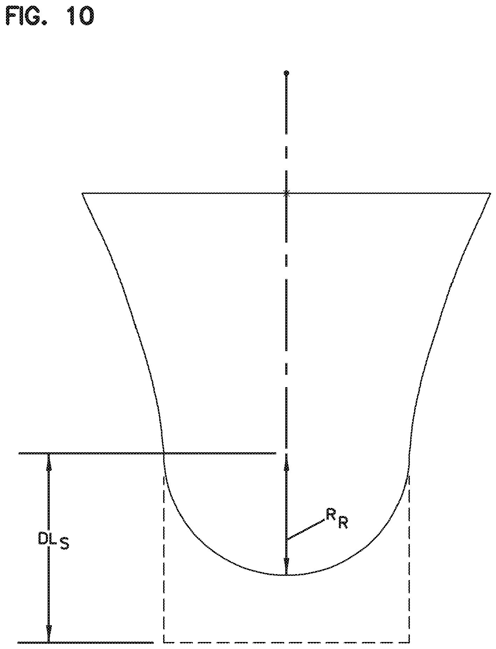

Referring to FIG. 10, in certain examples, the pockets between the teeth 160 can be further contoured to deepen the depths of the pockets in the dedendum area. In other words, dedendum length DL_{S} can be extended so that contact is prevented between the rollers 146 and the bottom ends of the pockets. By providing this additional clearance, the rotational drive arrangement 140 can better accommodate the rotary trommel drum 106 being out-of-round or off-center. In certain examples, the dedendum length DL_{S} is greater than the radii Rᵣ of the rollers 146 by at least 0.25 of an inch.

FIGS. 13 and 14 show the rotational drive arrangement 140 incorporated into a tub grinder 200. The tub grinder 200 includes a rotating tub 202 that rotates about a vertical axis 204. The sprocket 142 encircles the vertical axis 204. Multiple drive wheels 144 can be configured to engage the sprocket 142. The tub grinder can also include rotational roller guides that fit within a circumferential track that extends around the tub grinder.

The various embodiments described above are provided by way of illustration only and should not be construed to limit the claims attached hereto. Those skilled in the art will readily recognize various modifications and changes that may be made without following the example embodiments and applications illustrated and described herein, and without departing from the true spirit and scope of the following claims.

### Examples

Illustrative examples of the rotary machine disclosed herein are provided below. An example of the rotary machine may include any one or more, and any combination of, the examples described below.
Example 1. In combination with, or independent thereof, any example disclosed herein, a rotary machine includes a vessel that defines an interior for receiving materials. The vessel is mounted to rotate about an axis of rotation that extends through the vessel. The rotary machine also includes a sprocket mounted circumferentially about an exterior of the vessel so as to encircle the axis of rotation of the vessel. The sprocket includes a plurality of sprocket teeth. The sprocket defines a sprocket pitch diameter and a sprocket addendum diameter. The rotary machine also includes a drive wheel that intermeshes with the sprocket for driving rotation of the vessel about the axis of rotation of the vessel. The drive wheel includes a plurality of rollers that are received between the sprocket teeth of the sprocket. The rollers each have a roller diameter and a roller axis. The rollers are rotatable about their respective roller axes. The drive wheel has a drive wheel pitch diameter defined by the roller axes. The sprocket addendum diameter is equal to the sprocket pitch diameter plus a distance equal to at least 1.0 times the roller diameter.
Example 2. In combination with, or independent thereof, any example disclosed herein, the sprocket addendum diameter is equal to the sprocket pitch diameter plus a distance equal to at least 1.1 times the roller diameter.
Example 3. In combination with, or independent thereof, any example disclosed herein, the sprocket addendum diameter is equal to the sprocket pitch diameter plus a distance equal to at least 1.25 times the roller diameter.
Example 4. In combination with, or independent thereof, any example disclosed herein, the sprocket defines pockets between the sprocket teeth. The sprocket teeth include addendum sections, and the addendum sections include contoured pocket-defining surfaces that define at least portions of the pockets. The contoured pocket-defining surfaces are shaped such that the rollers track the contoured pocket-defining surfaces as the rollers move in and out of the pockets while the drive wheel drives rotation of the sprocket.
Example 5. In combination with, or independent thereof, any example disclosed herein, the roller diameters are actual roller diameters. The contoured pocket defines surfaces that are designed based on rollers having enlarged roller diameters. The enlarged roller diameters are in the range of .0025-.0075 inches larger than the actual roller diameters.
Example 6. In combination with, or independent thereof, any example disclosed herein, the drive wheel is oriented such that the pitch diameter of the drive wheel is offset at least 0.25 of an inch from the sprocket pitch diameter to prevent the rollers from bottoming out in the pockets in the event the sprocket is eccentric with respect to the axis of rotation of the vessel.
Example 7. In combination with, or independent thereof, any example disclosed herein, the sprocket includes a plurality of separately identifiable sprocket pieces attached to the vessel. The sprocket pieces cooperate to form the sprocket.
Example 8. In combination with, or independent thereof, any example disclosed herein, the vessel is supported from rotation by one or more trunnions.
Example 9. In combination with, or independent thereof, any example disclosed herein, the roller axes of at least two of the rollers are within an addendum circle of the sprocket at all times as the drive wheel drives rotation of the sprocket.
Example 10. In combination with, or independent thereof, any example disclosed herein, at certain times, the roller axes of least three of the rollers are within the addendum circle of the sprocket as the drive wheel drives rotation of the sprocket.
Example 11. In combination with, or independent thereof, any example disclosed herein, the vessel is a trommel drum, which includes a trommel screen.
Example 12. In combination with, or independent thereof, any example disclosed herein, the vessel is a tub of a tub grinder.
Example 13. In combination with, or independent thereof, any example disclosed herein, the vessel is supported by bearings which allow for rotation of the vessel about the axis of rotation of the vessel. The sprocket and the drive wheel are offset in a direction along the axis of rotation of the vessel from the bearings.
Example 14. In combination with, or independent thereof, any example disclosed herein, the sprocket pitch diameter equals the drive wheel pitch diameter multiplied by the number of sprocket teeth of the sprocket and divided by the number of rollers of the drive wheel.
Example 15. In combination with, or independent thereof, any example disclosed herein, a rotary machine including a vessel defining an interior for receiving materials. The vessel is mounted to rotate about an axis of rotation that extends through the vessel. The rotary machine also includes a sprocket mounted circumferentially about an exterior of the vessel so as to encircle the axis of rotation of the vessel. The sprocket includes a plurality of sprocket teeth. The sprocket defines a sprocket pitch diameter and a sprocket addendum diameter. The rotary machine further includes a drive wheel that intermeshes with the sprocket for driving rotation of the vessel about the axis of rotation of the vessel. The drive wheel includes a plurality of rollers that are received between the sprocket teeth of the sprocket. The rollers each have a roller diameter and a roller axis. The rollers are rotatable about their respective roller axes. The drive wheel has a drive wheel pitch diameter defined by the roller axes. The drive wheel and the sprocket are configured such that the roller axes of at least two of the rollers are within an addendum circle of the sprocket at all times as the drive wheel drives rotation of the sprocket.
Example 16. In combination with, or independent thereof, any example disclosed herein, at certain times, the roller axes of at least three of the rollers are within the addendum circle of the sprocket as the drive wheel drives rotation of the sprocket.
Example 17. In combination with, or independent thereof, any example disclosed herein, the sprocket addendum diameter is equal to the sprocket pitch diameter plus a distance equal to at least 1.1 times the roller diameter.
Example 18. In combination with, or independent thereof, any example disclosed herein, the sprocket addendum diameter is equal to the sprocket pitch diameter plus a distance equal to at least 1.25 times the roller diameter.
Example 19. In combination with, or independent thereof, any example disclosed herein, the sprocket defines pockets between the sprocket teeth. The sprocket teeth include addendum sections, and the addendum sections include contoured pocket-defining surfaces that define at least portions of the pockets. The contoured pocket-defining surfaces are shaped such that the rollers track the contoured pocket-defining surfaces as the rollers move in and out of the pockets while the drive wheel drives rotation of the sprocket.
Example 20. In combination with, or independent thereof, any example disclosed herein, the roller diameters are actual roller diameters, and the contoured pocket defining surfaces are designed based on rollers having enlarged roller diameters. The enlarged roller diameters are in the range of .0025-.0075 inches larger than the actual roller diameters.
Example 21. In combination with, or independent thereof, any example disclosed herein, wherein the drive wheel is oriented such that the drive wheel pitch diameter is offset at least 0.25 of an inch from the sprocket pitch diameter to prevent the rollers from bottoming out in the pockets in the event the sprocket is eccentric with respect to the axis of rotation of the vessel.
Example 21. In combination with, or independent thereof, any example disclosed herein, the sprocket includes a plurality of separately identifiable sprocket pieces attached to the vessel, and the sprocket pieces cooperate to form the sprocket.
Example 23. In combination with, or independent thereof, any example disclosed herein, the vessel is supported from rotation by one or more trunnions.
Example 24. In combination with, or independent thereof, any example disclosed herein, the vessel is a trommel drum, which includes a trommel screen.
Example 25. In combination with, or independent thereof, any example disclosed herein, the vessel is a tub of a tub grinder.
Example 26. In combination with, or independent thereof, any example disclosed herein, the vessel is supported by bearings which allow for rotation of the vessel about the axis of rotation of the vessel. The sprocket and the drive wheel are offset in a direction along the axis of rotation of the vessel from the bearings.
Example 27. In combination with, or independent thereof, any example disclosed herein, the sprocket pitch diameter equals the drive wheel pitch diameter multiplied by the number of sprocket teeth of the sprocket and divided by the number or rollers of the drive wheel.

## Claims

1. A rotary machine comprising:
a vessel defining an interior for receiving materials, the vessel being mounted to rotate about an axis of rotation that extends through the vessel;
a sprocket mounted circumferentially about an exterior of the vessel so as to encircle the axis of rotation of the vessel, the sprocket including a plurality of sprocket teeth, and the sprocket defining a sprocket pitch diameter and a sprocket addendum diameter;
a drive wheel that intermeshes with the sprocket for driving rotation of the vessel about the axis of rotation of the vessel, the drive wheel including a plurality of rollers that are received between the sprocket teeth of the sprocket, the rollers each having a roller diameter and a roller axis, the rollers being rotatable about their respective roller axes, and the drive wheel having a drive wheel pitch diameter defined by the roller axes; and
the sprocket addendum diameter being equal to the sprocket pitch diameter plus a distance equal to at least 1.0 times the roller diameter.

2. The rotary machine of claim 1, wherein the sprocket addendum diameter is equal to the sprocket pitch diameter plus a distance equal to at least 1.1 times the roller diameter.

3. The rotary machine of claim 1, wherein the sprocket addendum diameter is equal to the sprocket pitch diameter plus a distance equal to at least 1.25 times the roller diameter.

4. The rotary machine of any of claims 1-3, wherein the sprocket defines pockets between the sprocket teeth, wherein the sprocket teeth include addendum sections, wherein the addendum sections include contoured pocket-defining surfaces that define at least portions of the pockets, wherein the contoured pocket-defining surfaces are shaped such that the rollers track the contoured pocket-defining surfaces as the rollers move in and out of the pockets while the drive wheel drives rotation of the sprocket.

5. The rotary machine of claim 4, wherein the roller diameters are actual roller diameters, wherein the contoured pocket defining surfaces are designed based on rollers having enlarged roller diameters, and wherein the enlarged roller diameters are in the range of .0025-.0075 inches larger than the actual roller diameters.

6. The rotary machine of claim 4, wherein the drive wheel is oriented such that the pitch diameter of the drive wheel is offset at least ¼ of an inch from the sprocket pitch diameter to prevent the rollers from bottoming out in the pockets in the event the sprocket is eccentric with respect to the axis of rotation of the vessel.

7. The rotary machine of any of claims 1-6, wherein the sprocket includes a plurality of separately identifiable sprocket pieces attached to the vessel, wherein the sprocket pieces cooperate to form the sprocket.

8. The rotary machine of any of claims 1-7, wherein the vessel is supported from rotation by one or more trunnions.

9. The rotary machine of any of claims 1-8, wherein the roller axes of at least two of the rollers are within an addendum circle of the sprocket at all times as the drive wheel drives rotation of the sprocket.

10. The rotary machine of claim 9, wherein, at certain times, the roller axes of least three of the rollers are within the addendum circle of the sprocket as the drive wheel drives rotation of the sprocket.

11. The rotary machine of any of claims 1-10, wherein the vessel is a trommel drum which includes a trommel screen.

12. The rotary machine of any of claims 1-11, wherein the vessel is a tub of a tub grinder.

13. The rotary machine of any of claims 1-12, wherein the vessel is supported by bearings which allow for rotation of the vessel about the axis of rotation of the vessel, and wherein the sprocket and the drive wheel are offset in a direction along the axis of rotation of the vessel from the bearings.

14. The rotary machine of any of claims 1-13, wherein the sprocket pitch diameter equals the drive wheel pitch diameter multiplied by the number of sprocket teeth of the sprocket and divided by the number of rollers of the drive wheel.
